# EUROPEAN PATENT APPLICATION

(11) **EP 1 233 357 A1**
(43) Date of publication of application: **21.08.2002**
(21) Application number: 02002061.6
(22) Date of filing: 08.02.2002
(51) Int. Cl.: G06F 17/60

(54) **Computer system, method and computer software product for presenting information concerning economic improvement associated with using specific products related to bearings and seals**

(30) Priority: 14.02.2001 US 782081
(71) Applicant: Aktiebolaget SKF, S-415 50 Göteborg (SE)
(72) Inventor: Snelgrove, Todd C., Royersford, Pennsylvania 19468 (US)
(74) Representative: HOFFMANN - EITLE

(57) **Abstract**

A system, method and computer software product for presenting information to a user concerning the economic improvement or advantage associated with using specific products related to bearings and seals as compared to using other similar products involve the use of a processor, a memory unit storing product specific data, an inputting device for inputting plant specific data, and a display or other suitable device for presenting information. The processor is adapted to receive plant specific data from the inputting device to calculate, using the product specific data and the received plant specific data, a total economic improvement based on repair cost savings and at least one of increased productivity earnings and energy cost savings. The total economic improvement is then presented using the display.

## Description

### FIELD OF THE INVENTION

The present invention generally relates to a computer system, a method, and a computer software product for presenting information concerning economic improvement for a user when using specific products related to bearings and seals compared to using other similar products.

### BACKGROUND OF INVENTION

The knowledge associated with products and procedures related to these products, e.g., the knowledge necessary for properly handling the products, has increased during the last decade in a variety of technical fields. One of these fields involves bearings and seals. Even though the basic principles of today's bearings and seals are, in some cases, almost 100 years old, there are still significant differences in product performance of different products in the business field. The heightened competition in today's business environment calls for cost savings also in the field of bearing and seals.

U.S. Patent No. 5,960,417 discloses a computer system limited to determining the cost associated with the manufacturing process for a product. The disclosed computer system includes a database computer and a manufacturing cost computer, wherein the computer includes a central processor, a memory and a direct access storage device with tables of data including product mix table, an equipment table, an overhead table, a direct material table, a direct material standard usage table, and a rework table. The system is arranged to prepare data for use in costing, calculating hourly rates for a part, calculating final costs for a part and determining the cost of parts associated with a product. One limitation associated with the system described in U.S. Patent No. 5,960,417 is that it only determines costs in the specific case of manufacturing.

Product performance is of significant relevance when a company sells bearings and/or seals, or sells equipment incorporating bearings and/or seals. The term equipment here is interpreted to include machines and machinery. When purchasing low quality bearings and/or seals, or equipment incorporating low quality bearings and/or seals, it is not unlikely that one should expect the bearings, seals and/or equipment incorporating such bearings and/or seals to require more attention in terms of higher repair costs (e.g., how expensive it is to repair a bearing or seal in equipment). On the other hand, purchasing high quality bearings, seals and/or equipment with high quality bearings and/or seals often results in lower repair costs, lower downtime costs, and possibly lower costs associated with lower energy consumption.

A product that does not require repair as frequently or often as a competing product is of course considered more valuable to a company. The increased productivity earnings based on the choice of a high quality product is also a significant factor to consider. A longer time interval between equipment repair leads to shorter equipment downtime and this is highly desirable from the standpoint of productivity. Another considerably relevant factor involves the energy cost savings attributable to a choice of what bearings, seals or equipment incorporating bearings and/or seals consume less energy compared to competing bearings, seals or equipment incorporating such bearings and/or seals.

Thus the possibility of presenting information to a user concerning the economic advantages associated with using specific bearings and seals as compared to other similar products can be important from the standpoint of indicating the superiority of specific products in relation to other competing products.

### SUMMARY OF INVENTION

The present invention provides a way of presenting to a user (e.g., a purchaser) information concerning the economic improvement or advantages associated with using specific products related to bearings and seals as compared to using other similar products. In this way, the user is provided with useful information beyond the manufacturing costs associated with manufacturing the product.

According to one aspect of the present invention, a computer system for presenting information to a user regarding the economic advantages associated with using specific products related to bearings and seals as compared to similar products includes a processor, a memory unit, inputting means and presentation means. The memory unit contains product specific data. The processor is arranged to receive plant specific data from the inputting means. Using the product specific data and the received plant specific data, the processor calculates the total economic improvement or advantage based on repair cost savings and at least one of increased productivity earnings and energy cost savings. The total economic improvement or advantage is then displayed on the display means.

One advantage associated with the present invention is that a user of the system, for instance a potential customer intending to purchase bearings, seals and/or equipment incorporating bearings and/or seals or a supplier informing a potential customer of the superiority of specific products, can relatively easily and swiftly obtain information relating to cost savings and increased earnings associated with the use of specific bearings, seals and/or equipment incorporating bearings and/or seals as compared to the use of competing bearings, seals and/or equipment incorporating bearings and/or seals.

Another aspect of the present invention relates to a method for presenting information concerning the economic improvement or advantage associated with the use of specific products related to bearings and/or seals as compared to the use of other similar products. The method involves receiving plant specific data from an inputting means, calculating through use of the product specific data and the received plant specific data, a total economic improvement or advantage based on repair cost savings and at least one of increased productivity earnings and energy cost savings, and presenting the total economic improvement or advantage using on a presentation means.

With this aspect of the invention, a user (e.g., a supplier of bearings, seals and/or equipment incorporating bearings and/or seals), can relatively easily and quickly retrieve information about the cost savings and increased earnings associated with the use of specific bearings, seals and/or equipment incorporating bearings and/or seals as compared to the use of competing bearings, seals and/or equipment incorporating bearings and/or seals. Marketing information can thus be assembled to persuade or convince a potential purchaser of the superiority of purchasing specific bearings, seals and/or equipment incorporating bearings and/or seals.

A further aspect of the invention pertains to a computer program product loadable into the internal memory of a computer that includes software code portions for performing the method described above when run on a computer. An advantage of this aspect of the invention is that it can easily be distributed among potential customers for installation on their own computers with the purpose of obtaining information of cost savings and increased earnings based on the purchase of specific bearings, seals and/or equipment incorporating bearings and/or seals as compared to the purchase of competing bearings, seals and/or equipment incorporating bearings and/or seals.

According to a preferred form of the invention, the repair cost savings are arranged to be based on the number of rotating machines in a plant, the machine failure rate per unit of time, the increase in machine life from alignment, and related cost of fixing application. The increased productivity earnings can be arranged to be based on the number of machines that affect production and the cost of downtime per unit of time. Also, the energy cost savings are arranged to be based on machine usage per unit of time, motor voltage average, machine amperage, reduction in amperage draw, motor power factor, effect reduction for a machine caused by using a specific product, and energy cost. The total economic improvement or advantage can be arranged to be the sum of the repair cost savings, the increased productivity earnings, and the energy cost savings.

The processor is preferably arranged to comprise a connection to a computer network accomplishing a connection between the processor and the inputting means and the presentation means. This provides an easy to use possibility of presenting (for a supplier) and obtaining (for a potential customer) information for the user concerning economic improvements or advantages associated with the use of specific products related to bearings and seals as compared to the of other similar products. In addition, the software product preferably comprises product specific data, thus making the use of the computer software product easier.

A further aspect of the invention involves a graphical user interface for presenting information to a user setting forth economic advantage associated with using a specific product related to bearings or seals as compared to using another product related to bearings or seals. The graphical user interface includes a first interface element for selecting a specific product related to bearings or seals, and a second interface element for calculating repair cost savings, increased production and energy cost savings associated with use of the specific product and for calculating a total cost savings based on a sum of the repair cost savings, the increased production and the energy cost savings.

### BRIEF DESCRIPTION OF THE DRAWING FIGURES

The foregoing and additional features and characteristics of the present invention will become more apparent from the following detailed description considered with reference to the accompanying drawing figures in which like elements are designated by like reference numerals and wherein:
Fig. 1 is a schematic illustration of a computer system for presenting to a user information concerning economic improvements or advantages associated with the use of specific products related to bearings and seals as compared to the use of other similar products;
Fig. 2 is an illustration of the interface between a user and the present invention illustrating an example of the interface display in the case of "Laser alignment";
Fig. 3 is an illustration of data presented on the user interface or display relating to economic improvements or advantages based on plant specific data and product specific data; and
Fig. 4 illustrates how plant related data can be selected in the case of "Machine life".

### DETAILED DESCRIPTION OF THE INVENTION

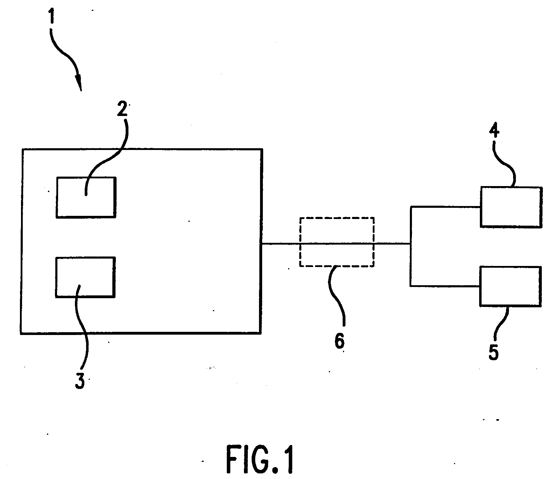

Fig. 1 illustrates a system 1 (i.e., a computer system) in accordance with the present invention for presenting information to a user concerning economic improvement or advantages associated with the use of specific products related to bearings and seals as compared to the use of other similar products. The computer system 1 includes a processor 2, a memory unit 3, an inputting device or inputting means 4, and a presentation means 5. The memory unit 3 contains product specific data identifying a variety of data and information related to specific products. The inputting device or inputting means 4 can be in the form of, for example, a keyboard and mouse and permits the user to input plant specific information or data as described below (e.g., information or data related to a specific plant housing machines containing bearings and/or seals). The presentation means 5 may be in the form of, for example, a computer screen or display.

The processor 2 is arranged to receive plant specific data from the inputting means 4 for processing by the processor 2. Upon receiving this information, the processor 2 is adapted to calculate a total economic improvement or advantage (e.g., monetary savings) based on repair cost savings as well as increased productivity earnings and/or energy cost savings. It is thus envisioned with the present invention that all three components of the total economic improvement or advantage need not necessarily be calculated. The calculations are based on the product specific data contained in the memory unit 3 and the plant specific data received from the inputting means 4. It is envisioned that the present invention can also involve entering some product specific data using the inputting means 4. Also, it is possible that some plant specific data may be contained in the memory unit 3. The processor 2 is arranged to present the total economic improvement at the presentation means 5.

An example of an interface 10 between the user and the computer system 1 is presented in Fig. The interface 10 is presented at the presentation means 5 between the user and the computer system 1. The top of the interface is provided with a set of pointers 11 that can be clicked or otherwise actuated. These pointers 11 are related to a variety of technical fields involving the use of bearings and/or seals (e.g., automotive, electric motors, food, pulp and paper, steel, aggregate, conveyors, fan and blower, etc.). Clicking on one of the pointers 11 leads the user to an interface 10 where it is possible to estimate cost savings based on plant specific data and product specific data. In the preferred embodiment, the cost savings are set forth over the period of a year.

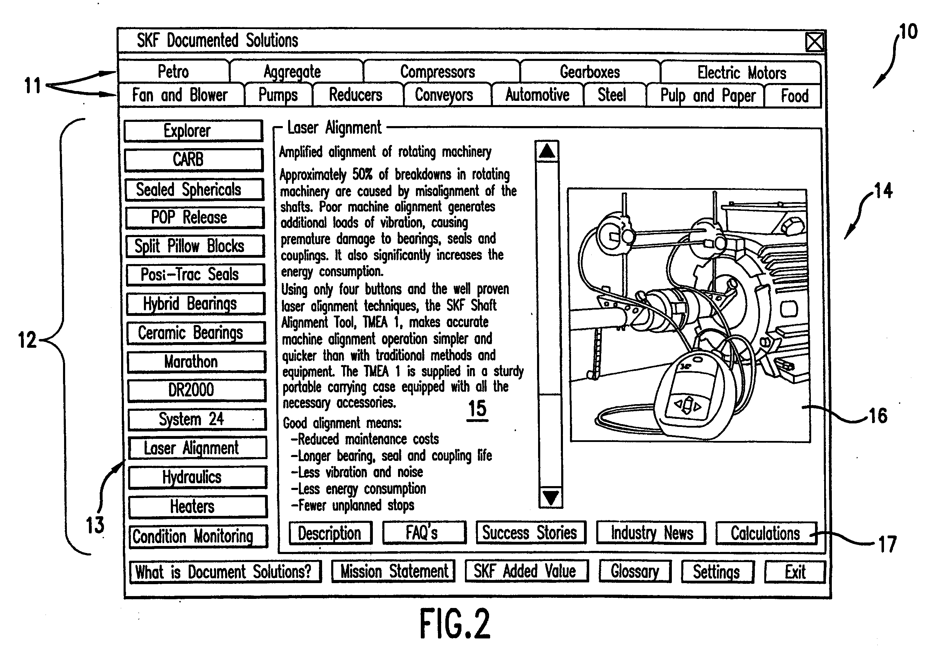

Referring further to the interface shown in Fig. 2, a set of buttons 12 that can be clicked or otherwise actuated are positioned along the left hand side. These buttons 12 are related to particular types of bearings, seals, or products/equipment incorporating bearings or seals. In Fig. 2, the button "Laser Alignment" 13 has been pressed which results in the presentation of information related to laser alignment. This information is presented in the information portion 14 of the interface 10 and can include a text portion 15 and an image portion 16. In this case for example, a text explanation is presented in the text portion 15 explaining reasons behind breakdowns in rotating machinery and an image of equipment is presented in the image portion 16. Also, measures or steps that can be implemented to avoid breakdowns are also set forth in the text portion 15 of the information portion 14.

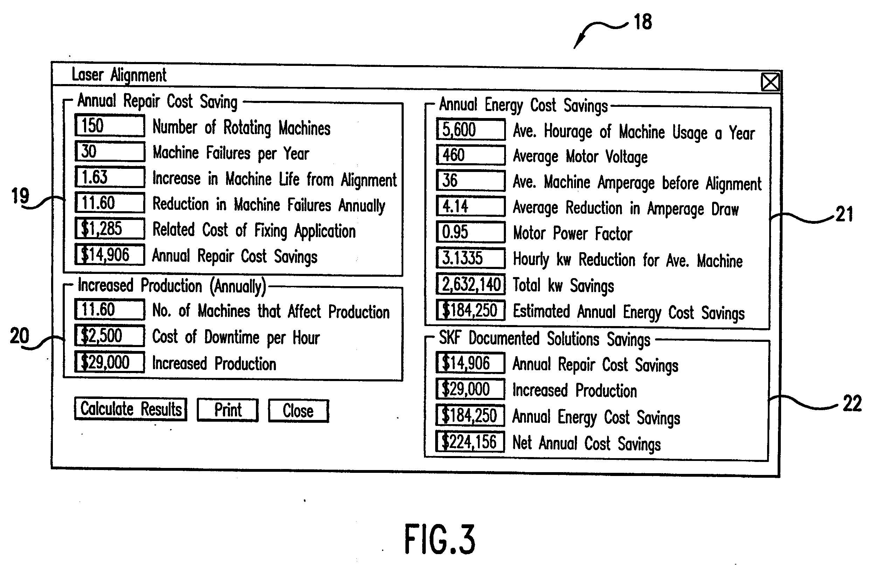

By clicking on the button marked "Calculations" 17, it is possible to perform calculations of the economic improvement or advantage associated with the use of specific products related to bearings and/or seals as compared to the use of other similar products. The results of the calculations based on information or data input by the user are displayed in a second interface 18 shown in Fig. 3. In the illustrated embodiment, the second interface 18 is divided into four sections or portions, including an annual repair cost savings portion 19, an increased production portion 20, an energy cost savings portion 21, and a total economic improvement or advantage portion 22.

In the illustrated embodiment, the repair cost savings are set forth based on the number of rotating machines in the plant, the machine failure per unit of time, the increase in machine life associated with alignment (proper alignment), and the related cost of fixing application. The repair cost savings portion 19 also presents the reduction in machine failures annually. As can be seen in Fig. 3, these various factors lead to an annual repair cost savings of $14,906. The annual repair costs savings calculation is based on the reduction in annual machine failures (11.6) and the related cost of fixing application ($1,285). Stated differently, the annual repair costs savings calculation is as follows: (30·1285)-(30·1285/1.63)=$14,906.

The annual increased production section shown at the interface 18 of Fig. 3 sets forth the increase in productivity earnings based on user input data involving the number of machines that affect production and the cost of downtime per unit of time (hour). A calculation is presented in the increased production section 20 in Figure 3 indicating that the increase in productivity results in an increase in earnings (savings in cost) of $29,000. This is obtained by multiplying the number of machines that affect production and the cost of downtime per hour (11.6·$2,500=$29,000).

The energy cost savings section 21 of the interface 18 shown in Fig. 3 sets forth some input information or data involving the machine usage per unit of time (average hourage of machine usage per year), the motor voltage average, the machine amperage, the reduction in amperage draw (due to precision alignment which often is approximately 11,5 % of the machine amperage), the motor power factor, the effect of a reduction caused by using a specific product (saved kW = (volts x amps saved x power factor x 1.732)/1000), and the energy cost. Using this formula leads to an estimated annual energy cost savings of $184,250 in the illustrated example and this estimated annual energy cost savings is presented in the energy costs savings portion 21 of the interface 18. In the total economic improvement or advantage portion 22 of the interface 18 illustrated in Fig. 3, the sum of the repair cost savings, the increased productivity earnings, and the energy cost savings is added together to produce a total economic improvement or savings of $224,156.

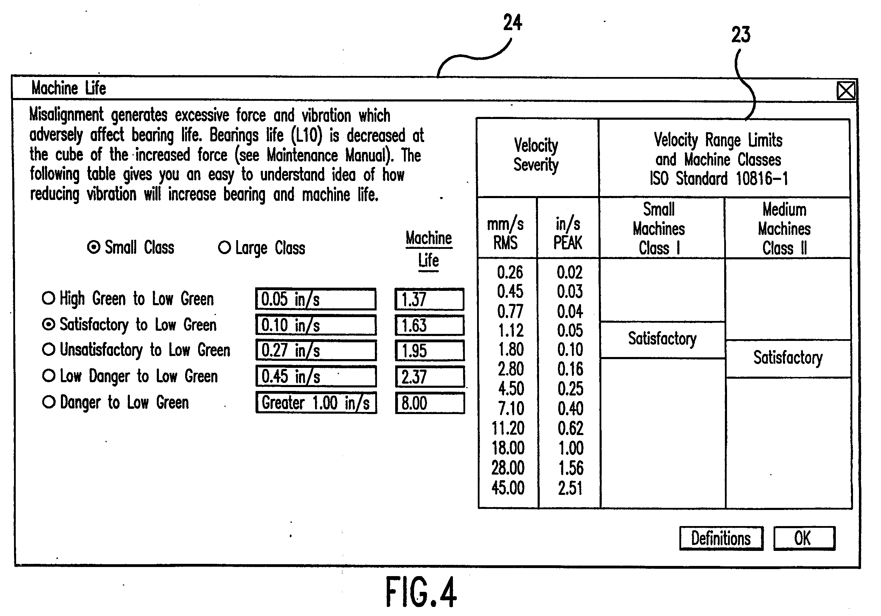

Fig. 4 illustrates a further interface 24 providing information to the user about machine life and the effect that, for example, misalignment has on the machine life. The interface 24 shown in Fig. 4 is obtained by clicking on the text "Increase in Machine Life from Alignment" in the interface 18 of Fig. 3. In this regard, it is to be recognized that some of the text items set forth at the interfaces are adapted to be clicked or otherwise actuated. By doing so, the user can obtain information, data or the like that is related to the clicked or actuated text item.

With the interface shown in Fig. 4, the user is provided with information regarding machine life and how vibration affects the machine life. To determine how vibration affects the machine life, the user selects the appropriate machine class and selects one of the appropriate entries on the left below the machine class. In the illustrated embodiment, the user has selected "small class" and "Satisfactory to Low Green", thus indicating an increased machine life of 1,63. The user is supported by the information in the velocity range limits and machine classes section 23 of the interface 24.

In an alternative embodiment to the one presented above, the processor 2 is arranged to comprise a connection to a computer network 6 (see Fig. 1) producing a connection between the processor 2 and the inputting means 4 and presentation means 5. This facilitates the opportunity of sending, receiving and presenting information on a computer network, such as the internet, to a user concerning economic improvements or advantages associated with the use of specific products related to bearings and seals as compared to the use of other similar products.

The principles, preferred embodiments and mode of operation of the present invention have been described in the foregoing specification. However, the invention which is intended to be protected is not to be construed as limited to the particular embodiments described. Further, the embodiments described herein are to be regarded as illustrative rather than restrictive. Variations and changes may be made by others, and equivalents employed, without departing from the spirit of the present invention.

## Claims

1. A system for presenting information to a user concerning economic improvement associated with using specific products related to bearings and seals as compared to using other products, comprising a memory unit storing product specific data; inputting means for inputting plant specific data; a processor connected to the inputting means for receiving the plant specific data inputted into the inputting means, and for calculating through use of the product specific data and the received plant specific a total economic improvement based on repair cost savings and at least one of increased productivity earnings and energy cost saving; and presentation means for presenting the total economic improvement calculated by the processor.

2. The system according to Claim 1, wherein the repair cost savings are based on a number of rotating machines in the plant, machine failures per unit of time, an increase in machine life associated with alignment, and related cost of fixing application.

3. The system according to Claim 1, wherein the increased productivity earnings are based on a number of machines that affect production and a cost of downtime per unit of time.

4. The system according to Claim 1, wherein the energy cost savings are based on machine usage per unit of time, motor voltage average, machine amperage, reduction in amperage draw, motor power factor, effect reduction for a machine caused by using a specific product, and energy cost.

5. The system according to Claim 1, wherein the processor calculates the total economic improvement based on a sum of the repair cost savings, the increased productivity earnings and the energy cost savings.

6. The system according to Claim 1, wherein the processor is connected to a computer network to produce a connection between the processor and the inputting means and the presentation means.

7. A method for presenting information to a user setting forth an economic improvement associated with use of specific products related to bearings or seals as compared to using other products related to bearings or seals, comprising:
inputting plant specific data into an inputting means;
using the inputted plant specific data and product specific data stored in a memory that relates to a specific product relating to bearings or seals to calculate a total economic improvement associated with using the specific product as compared to using another product related to bearings or seals based on repair cost savings and at least one of increased productivity earnings and energy cost savings; and
presenting the total economic improvement at a presentation means for presenting the total economic improvement.

8. The method according to Claim 7, wherein the repair cost savings are based on a number of rotating machines in the plant, machine failure per unit of time, an increase in machine life associated with alignment, and related cost of fixing application.

9. The method according to Claim 7, wherein the increased productivity earnings are based on a number of machines that affect production and a cost of downtime of the machines per unit of time.

10. The method according to Claim 7, wherein the energy cost savings are based on machine usage per unit of time, motor voltage average, machine amperage, reduction in amperage draw, motor power factor, effect reduction for a machine caused by using the specific product, and energy cost.

11. The method according to Claim 7, wherein the total economic improvement is the sum of the repair cost savings, the increased productivity earnings, and the energy cost savings.

12. A computer program product loadable into an internal memory of a computer, comprising software code portions for performing the method of Claim 7 when run on a computer.

13. A computer software product according to Claim 13, further comprising product specific data.

14. A graphical user interface for presenting information to a user setting forth economic advantage associated with using a specific product related to bearings or seals as compared to using another product related to bearings or seals, comprising:
a first interface element for selecting a specific product related to bearings or seals; and
a second interface element for calculating repair cost savings, increased production and energy cost savings associated with use of the specific product and for calculating a total cost savings based on a sum of the repair cost savings, the increased production and the energy cost savings.

15. The graphical user interface of Claim 14, wherein first interface element includes a link for each of a plurality of different technical fields involving the use of bearings and seals.
